(19) Europäisches Patentamt
European Patent Office
Office européen des brevets

(11) **EP 1 849 626 B1**

(12) **EUROPEAN PATENT SPECIFICATION**

(45) Date of publication and mention
of the grant of the patent:
**22.10.2008   Bulletin 2008/43**

(51) Int Cl.:
**B60C 15/06** (2006.01)

(21) Application number: **07007824.1**

(22) Date of filing: **17.04.2007**

(54) **Pneumatic tire for racing**

Luftreifen für Fahrzeugrennen

Pneu pour courses automobiles

(84) Designated Contracting States:
**DE**

(30) Priority:   **26.04.2006   JP 2006121520**

(43) Date of publication of application:
**31.10.2007   Bulletin 2007/44**

(73) Proprietor: **SUMITOMO RUBBER INDUSTRIES, LTD.**
**Hyogo-ken (JP)**

(72) Inventor: **Ikeda, Akio**
**Kobe-shi**
**Hyogo-ken 651-0072 (JP)**

(74) Representative: **Manitz, Finsterwald & Partner GbR**
**Postfach 31 02 20**
**80102 München (DE)**

(56) References cited:
| | |
|---|---|
| EP-A1- 0 017 258 | WO-A-00/32424 |
| JP-A- 9 175 123 | JP-A- 9 309 303 |
| JP-A- 2003 285 611 | JP-A- 2004 217 042 |
| US-A- 4 896 709 | US-A- 4 941 523 |
| US-A1- 2003 041 943 | |

**Description**

This application claims priority on Patent Application No. 2006-121520 filed in JAPAN on April 26, 2006.

BACKGROUND OF THE INVENTION

Field of the Invention

The present invention relates to a pneumatic tire to be used for auto racing.

Description of the Related Art

At auto racing, sudden acceleration is often applied to cars. When accelerating, it is required that tires for racing have an excellent traction performance. Upon acceleration, great load is applied on rear wheels of a car and small load is applied on front wheels. Front-wheel-drive cars and four-wheel-drive cars tend to be insufficient in traction of the front wheels resulting from the small load on the front wheels. Especially for tires for the front wheels, traction performance is important.

At racing, cars often corner at high speed. Upon cornering, force in a lateral direction is applied on a tire by a centrifugal force. To prevent slips on cornering, it is required that tires have an excellent side grip performance. In tires with an aspect ratio of 45% or greater and 60% or less, a particularly excellent side grip performance is required.

The traction performance and the side grip performance greatly depend on ply structure of a tire. A variety of proposals concerning the ply structure have been made. For example, Japanese Laid-Open Patent Publication No. 2003-285611 has disclosed a tire having a reinforcing layer layered on an apex of a bead. Japanese Laid-Open Patent Publication No. 2004-217042 has disclosed a tire which has a reinforcing layer layered to carcass ply.

The traction performance correlates to vertical stiffness of a tire. A tire with small vertical stiffness is excellent in the traction performance. The side grip performance correlates to lateral stiffness of a tire. A tire with great lateral stiffness is excellent in the side grip performance. A tire in which vertical stiffness is set to be small because the traction performance is regarded as important, tends to be insufficient in lateral stiffness. In these tires, the side grip performance is insufficient.

A pneumatic tire having the features of the preamble of claim 1 is described in EP-A-0 017 258.

SUMMARY OF THE INVENTION

The object of the present invention is to provide a pneumatic tire for racing which is excellent in both the traction performance and the side grip performance.

This object is achieved with a.pneumatic tire having the features of claim 1.

Subclaims are directed to preferable embodiments.

BRIEF DESCRIPTION OF THE DRAWINGS

Fig. 1 is a sectional view showing a part of a pneumatic tire for racing according to an embodiment of the present invention,
Fig. 2 is an enlarged sectional view showing a part of the tire in Fig. 1, and
Fig. 3 is a sectional view showing a part of a pneumatic tire for racing according to another embodiment of the present invention.

DESCRIPTION OF THE PREFERRED EMBODIMENTS

The present invention will be described below in detail based on preferred embodiments with reference to the drawings.

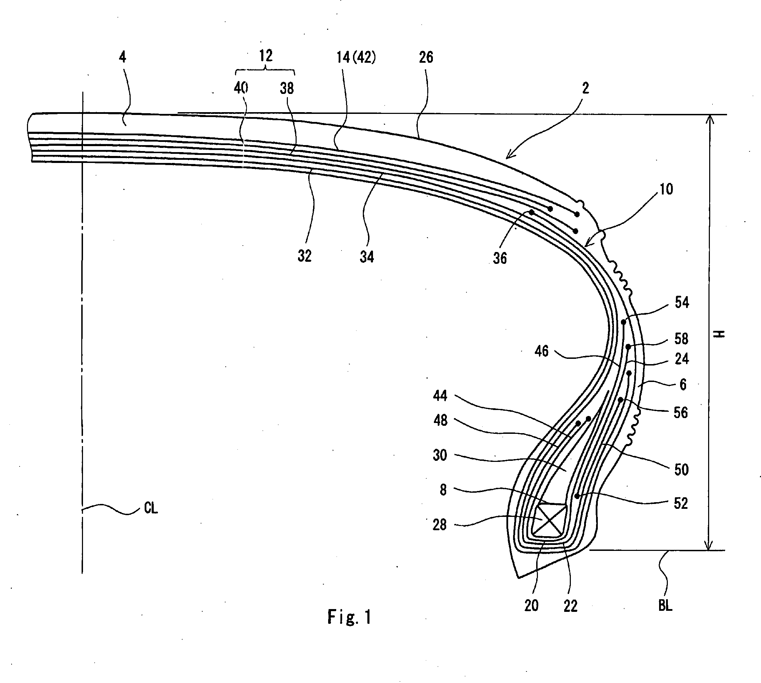

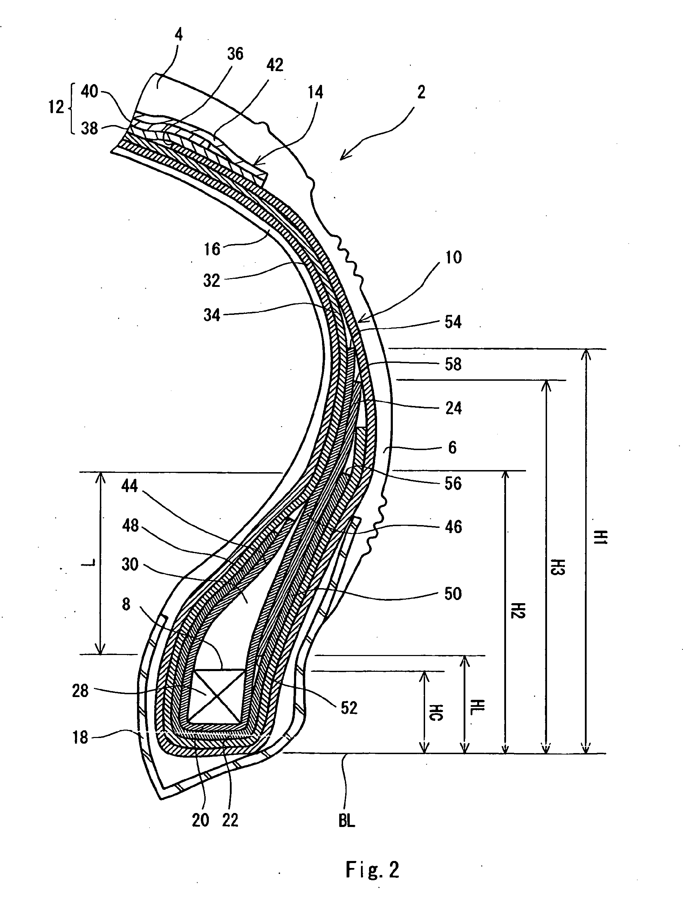

In Figures 1 and 2, a vertical direction is set to be a radial direction of a tire 2, a transverse direction is set to be an axial direction of the tire 2, and a perpendicular direction to the sheet is set to be a circumferential direction of the tire 2. The tire 2 takes an almost symmetrical shape about a one-dotted chain line CL in Fig. 1. This one-dotted chain line CL indicates an equator plain of the tire 2.

The tire 2 comprises a tread 4, a sidewall 6, a bead 8, a carcass 10, a belt 12, a band 14, an inner liner 16, a chafer 18, a first reinforcing layer 20, a second reinforcing layer 24 and a third reinforcing layer 22. The tire 2 is a tubeless type tire.

The tread 4 is formed by a crosslinked rubber and has a shape which is outwardly convex in the radial direction. The tread 4 has a tread surface 26. The tread surface 26 comes in contact with a road surface. On the tread 4, a groove may be carved.

The sidewall 6 extends almost inward in the radial direction from an end of the tread 4. The sidewall 6 is formed by a crosslinked rubber. The sidewall 6 bends to absorb a shock from the road surface. In addition, the sidewall 6 prevents an external damage to the carcass 10.

The bead 8 is located almost inward of the sidewall 6 in the radial direction. The bead 8 has a core 28 and an apex 30 which extends outward in the radial direction from the core 28. The core 28 is ring-shaped and includes a plurality of non-extensible wires (typically, steel wires). The apex 30 has a which is tapered outwardly in the radial direction, and is formed by a crosslinked rubber with high hardness. In light of lateral stiffness, hardness (JIS-A) of the apex 30 is preferably equal to or greater than 80, more preferably equal to or greater than 85 and particularly preferably equal to or greater than 90. The hardness is preferably equal to or less than 98.

The carcass 10 is formed by a first carcass ply 32 and a second carcass ply 34. The first carcass ply 32 and the second carcass ply 34 are laid between the beads 8 on both sides along the insides of the tread 4 and the sidewalls 6. The first carcass ply 32 and the second carcass ply 34 are turned up around the core 26 from inward to outward in the axial direction. A turnup end 36 of the first carcass ply 32 extends to reach immediately under the belt 12. This carcass 10 has an ultra high turnup structure.

The first carcass ply 32 and the second carcass ply 34 are formed by a cord and a topping rubber, which is not shown in Figures. An absolute value of an angle of the cord to the equator plane is usually 70 degrees or greater and 90 degrees or less. In other words, the carcass 10 has a radial structure. The cord is usually formed by an organic fiber. Examples of a preferable organic fiber include a polyester fiber, a nylon fiber, a rayon fiber, a polyethylene naphthalate fiber and an aramid fiber. In light of lateral stiffness, a polyester fiber is preferable. A preferable fineness of the cord is 900 dtex/2 or greater and 2100 dtex/2 or less. A preferable density of the cord is 40 ends/5 cm or greater and 55 ends/5 cm or less. A carcass having a bias structure may be employed.

The belt 12 is located outward of the carcass 10 in the radial direction. The belt 12 is layered on the carcass 10. The belt 12 reinforces the carcass 10. The belt 12 is formed by an inner belt ply 38 and an outer belt ply 40. The inner belt ply 38 and the outer belt ply 40 are formed by a cord and a topping rubber respectively, which is not shown in Figures. The cord is inclined to the equator plane. An absolute value of the inclination angle is usually 10 degrees or greater and 35 degrees or less. The inclining direction of the cord of the inner belt ply 38 to the equator plane is reverse to that of the cord of the outer belt ply 40 to the equator plane. A preferable material for the cord is steel. A preferable thickness of the steel cord is 0.5 mm or greater and 2.0 mm or less. A preferable density of the cord is 30 ends/5 cm or greater and 60 ends/5 cm or less. An organic fiber may be used for the cord.

The band 14 is formed by a band ply 42. The band ply 42 covers the belt 12. The band ply 42 is formed by a cord and a topping rubber, which is not shown in Figures. The cord extends circumferentially and is wound spirally. This cord is referred to as jointless. As the belt 12 is bound with this cord, a lifting of the belt 12 is suppressed. The cord is usually formed by an organic fiber. Examples of a preferable organic fiber include a nylon fiber, an aramid fiber, a polyester fiber, a rayon fiber and a polyethylene naphthalate fiber. What is referred to as a hybrid cord formed by two or more kinds of fibers may be used. In a typical hybrid cord, a nylon fiber and an aramid fiber are used in combination. The band 14 may be formed by a cut ply.

The inner liner 16 is bonded to an inner surface of the carcass 10. The inner liner 16 is formed by a crosslinked rubber. A rubber with a low air permeability is used for the inner liner 16. The inner liner 16 plays a part in keeping the internal pressure of the tire 2.

The chafer 18 is located in the vicinity of the bead 8. When the tire 2 is fitted to a rim, the chafer 18 abuts on the rim. By this abutment, the vicinity of the bead 8 is protected. The chafer 18 is usually formed by a cloth and a rubber impregnated into the cloth. The chafer 18 formed only by a rubber may be used.

The first reinforcing layer 20 is partially layered on the bead 8. The first reinforcing layer 20 is turned up around the core 28 from inward to outward in the axial direction. The first reinforcing layer 20 can be divided into an inner part 44 and an outer part 46 by the core 28 as a boundary. The first reinforcing layer 20 is formed by a crosslinked rubber which is reinforced with numerous cords. A material for the cords is an organic fiber. A preferable organic fiber includes an aramid fiber, a nylon fiber, a polyester fiber, a rayon fiber and a polyethylene naphthalate fiber. In light of reinforcing effect, an aramid fiber is particularly preferable. A preferable fineness of the cord is 900 dtex/2 or greater and 2100 dtex/2 or less. A preferable density of the cord is 15 ends/5 cm or greater and 30 ends/5 cm or less.

The third reinforcing layer 22 is partially layered on the reinforcing layer 20. The third reinforcing layer 22 is turned up around the core 28 from inward to outward in the axial direction. The third reinforcing layer 22 can be divided into an inner part 48 and an outer part 50 by the core 28 as a boundary. The third reinforcing layer 22 is formed by a crosslinked rubber which is reinforced with numerous cords. A material for the cords is equal to a material for the cords of the reinforcing layer 20.

The second reinforcing layer 24 is layered on the outer part 46 of the first reinforcing layer 20. The second reinforcing layer 24 is not turned up around the core 28. A lower part of the second reinforcing layer 24 is located between the outer part 46 of the first reinforcing layer 20 and the outer part 50 of the third reinforcing layer 22. The second reinforcing layer 24 is formed by a crosslinked rubber reinforced with numerous steel cords. A thickness of the steel cord is preferably 0.1 mm or greater and 1.0 mm or less. A density of the steel cord is preferably 20 ends/5 cm or greater and 50 ends/5 cm or less.

Since this tire 2 has the three reinforcing layers 20, 22 and 24, the tire 2 has high lateral stiffness. Even when the traction performance is regarded as important and vertical stiffness is set to be small, great lateral stiffness can be achieved by the three reinforcing layers 20, 22 and 24. This tire 2 is excellent in side grip performance. Especially the second reinforcing layer 24 which includes the steel cord is greatly responsible to lateral stiffness. In the tire 2, the second reinforcing layer 24 is located outward of the outer part 46 of the first reinforcing layer 20. By disposing the second reinforcing layer 24 outwardly, extremely great lateral stiffness is achieved.

As mentioned above, the second reinforcing layer 24 is located between the first reinforcing layer 20 and the third reinforcing layer 22. By this structure, extremely great lateral stiffness can be achieved. The second reinforcing layer 24 may be located outward of the third reinforcing layer 22 in the axial direction.

In Fig. 2, what is indicated by a both-sided arrowhead HC is a height from a base line BL to an upper end of the core 28. What is indicted by a both-sided arrowhead HL is a height from the base line BL to a lower end 52 of the second reinforcing layer 24. The height HL is greater than the height HC. In other words, the lower end 52 is located outward of the core 28 in the radial direction. The second reinforcing layer 24 does not deteriorate workability when tires are fitted to a rim. In this respect, a difference (HL - HC) is preferably equal to or greater than 1 mm, and more preferably equal to or greater than 3 mm. In light of lateral stiffness, the difference (HL - HC) is preferably equal to or less than 15 mm, and more preferably equal to or less than 10 mm.

In Fig. 2, what is indicated by a both-sided arrowhead H1 is a height of an turnup end 54 of the first reinforcing layer 20, what is indicated by a both-sided arrowhead H2 is a height of an turnup end 56 of the third reinforcing layer 22, and what is indicated by a both-sided arrowhead H3 is a height of an upper end 58 of the second reinforcing layer 24. The heights H1, H2 and H3 meet the following formula.

$$H1 > H3 > H2$$

In other words, the upper end 58 is located between the turnup end 54 and the turnup end 56 in the radial direction. Making a case for this tire 2 is easy. In the tire 2 wherein the turnup end 54, the upper end 58 and the turnup end 56 are positioned in order, since stiffness changes gradually along the axial direction, vehicles can move smoothly. The heights H1, H2 and H3 may meet the following formula.

$$H2 > H3 > H1$$

A length of the second reinforcing layer 24 in the radial direction is indicated with (H3 - HL). A percentage of the length (H3 - HL) to a height H of the tire 2 (See Fig. 1) is preferably 15 % or greater and 50 % or less. By the second reinforcing layer 24 with the percentage of equal to or greater than 15 %, a great lateral stiffness can be achieved. In this respect, the percentage is more preferably equal to or greater than 20 %, and particularly preferably equal to or greater than 30 %. By the second reinforcing layer 24 with the percentage of equal to or less than 50 %, an excess vertical stiffness can be suppressed. In this respect, the percentage is more preferably equal to or less than 45 %, and particularly preferably equal to or less than 40 %.

A percentage of the height H1 to the height H is preferably 50 % or greater and 70 % or less. By the first reinforcing layer 20 with the percentage of equal to or greater than 50 %, a great lateral stiffness can be achieved. In this respect, the percentage is more preferably equal to or greater than 55 %. By the first reinforcing layer 20 with the percentage of equal toor less than 70%, an excess vertical stiffness can be suppressed. In this respect, the percentage is more preferably equal to or less than 60 %.

A percentage of the height H2 to the height H is preferably 30 % or greater and 45 % or less. By the third reinforcing layer 22 with the percentage of equal to or greater than 30 %, a great lateral stiffness can be achieved. In this respect, the percentage is more preferably equal to or greater than 35 %. By the third reinforcing layer 22 with the percentage of equal to or less than 45 %, an excess vertical stiffness can be suppressed. In this respect, the percentage is more preferably equal to or less than 40 %.

An absolute value of a difference (H1 - H3) between the height H1 and the height H3 is preferably equal to or greater than 1.0 mm. In the tire 2 with this absolute value of equal to or greater than 1.0 mm, as the turnup end 54 and the upper end 58 are parted from each other, stress concentration is not caused. This tire 2 is excellent in durability. In this respect, the absolute value is more preferably equal to or greater than 2.0 mm. The absolute value is preferably equal to or less than 10 mm.

An absolute value of a difference (H3 - H2) between the height H3 and the height H2 is preferably equal to or greater than 1.0 mm. In the tire 2 with this absolute value of equal to or greater than 1.0 mm, as the upper end 58 and the turnup end 56 are parted from each other, stress concentration is not caused. This tire 2 is excellent in durability. In this respect, the absolute value is more preferably equal to or greater than 2.0mm. The absolute value is preferably equal to or less than 10 mm.

In Fig. 2, what is indicated by a both-sided arrowhead L is a distance of an area in the radial direction where the three reinforcing layers 20, 22 and 24 are layered. In light of lateral stiffness, a percentage of the distance L to the height H is preferably equal to or greater than 30 %, and more preferably equal to or greater than 35 %. The percentage is preferably equal to or less than 45 %.

When making a case for the tire 2, a rubber sheet of the first reinforcing layer 20 and a rubber sheet of the second reinforcing layer 24 are assembled to be provided to a former. Further, a rubber sheet of the third reinforcing layer 22 is also provided to this former. These sheets and carcass plies and the like are assembled into a green tire in the former. This green tire is compressed and heated in a mold to obtain the tire 2.

When measuring dimensions and angles of each member of the tire 2, the tire 2 is fitted into a normal rim and filled with air to have a normal internal pressure. Under the measurement, a load is not applied on the tire 2. In the present specification, the normal rim means a rim provided by a standard system including standards of the tire 2. A "standard rim" in JATMA standards, a "Design Rim" in TRA standards and a "Measuring Rim" in ETRTO standards are included in the normal rim. In the present specification, a normal internal pressure means an internal pressure provided by a standard system including standards of the tire 2. A "maximum air pressure" in the JATMA standards, a "maximum value" described in "TIRE LOAD LIMITS AT VARIOUS COLD INFLATION PRESSURE" in the TRA standards, and "INFLATION PRESSURE" in the ETRTO standards are included in the normal internal pressure. As a matter of convenience, an internal pressure of the tire 2 for passenger cars is set to be 180 kPa.

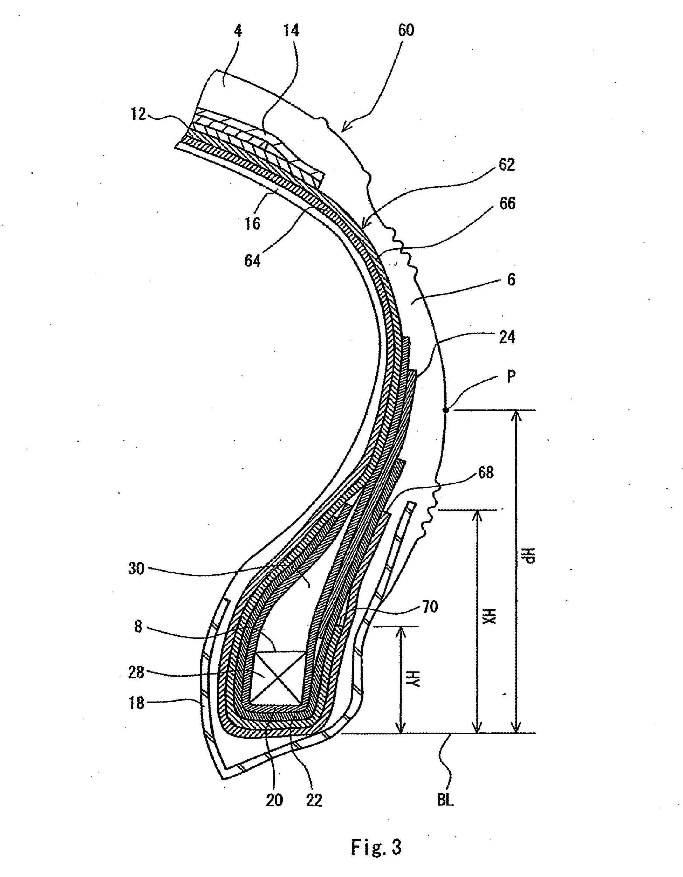

Fig. 3 is an enlarged sectional view showing a part of a pneumatic tire 60 for racing according to another embodiment of the present invention. This tire 60 comprises the tread 4, the sidewall 6, the bead 8, a carcass 62, the belt 12, the band 14, the inner liner 16, the chafer 18, the first reinforcing layer 20, the third reinforcing layer 22 and the second reinforcing layer 24. Structure of members of the tire 60 except the carcass 62 is equal to that of members of the tire 2 shown in Figures 1 and 2.

The carcass 62 is formed by a first carcass ply 64 and a second carcass ply 66. The first carcass ply 64 and the second carcass ply 66 are laid between the beads 8 on both sides along the insides of the tread 4 and the sidewalls 6. The first carcass ply 64 and the second carcass ply 66 are turned up around the core 28 from inward to outward in the axial direction. A turnup end 68 of the first carcass ply 64 is located outward of the apex 30 in the axial direction. A turnup end 70 of the second carcass ply 66 is also located outward of the apex 30 in the axial direction. The turnup ends 68 and 70 are located inward of the point P of the maximum width of the tire in the radial direction. This carcass 62 has a low turnup structure.

As the tire 60 has the low turnup structure, vertical stiffness is small. The conventional tire using the low turnup structure tends to be insufficient in lateral stiffness. In the tire 60 shown in Fig. 3, the three reinforcing layers 20, 22 and 24 are responsible to lateral stiffness. In this tire 60, both small vertical stiffness and great lateral stiffness can be achieved. This tire 60 is excellent in traction performance and side grip performance.

In Fig.3, what is indicated by a both-sided arrowhead HX is a height of the turnup end 68, what is indicated by a both-sided arrowhead HY is a height of the turnup end 70, and what is indicated by a both-sided arrowhead HP is a height of the point P of the maximum width of the tire.

In light of small stiffness, a percentage of the height HX to the height HP is preferably equal to or less than 80 %, and more preferably equal to or less than 70 %. The percentage is preferably equal to or greater than 50 %.

In light of small stiffness, a percentage of the height HY to the height HP is preferably equal to or less than 45 %, and more preferably equal to or less than 40 %. The percentage is preferably equal to or greater than 20 %.

EXAMPLES

[Example 1]

A pneumatic tire for racing with the structure shown in Fig. 3 was produced. The size of the tire is "235 / 45R17". The tire has a carcass with a low turnup structure. A carcass cord is formed by a polyester fiber. A fineness of the carcass cord is "1670 dtex/2". A density of the carcass cord is 50 ends/5 cm. A hardness (JIS-A) of an apex of the tire is 92. A belt cord is formed by steel. This steel cord has a "1 X 4" construction. A thickness of the steel cord is 0.27 mm. A band cord has a hybrid structure with an aramid fiber and a nylon fiber. This band cord is jointless type. Cords of a first reinforcing layer and a third reinforcing layer are formed by an aramid fiber. A fineness of the cord is "1670 dtex/2". A density of the cord is 22 ends/5 cm. A cord of a second reinforcing layer is formed by steel. This steel cord has a "2 + 2" construction. A thickness of the steel cord is 0.23 mm. A density of the steel cord is 38 ends/5 cm. Dimensions of each carcass ply and each reinforcing layer are shown in the following table 1.

[Example 2 to 5]

Tires according to examples 2 to 5 were obtained in the same manner as in the example 1 except that a length of the second reinforcing layer was set as shown in the following table 1.

[Example 6]

A tire according to an example 6 was obtained in the same manner as in the example 1 except that the height H2 of the third reinforcing layer was set to be the same as the height H3 of the second reinforcing layer.

[Example 7]

A tire according to an examples 7 was obtained in the same manner as in the example 1 except that the second reinforcing layer was disposed outward of the third reinforcing layer.

[Comparative Example 1]

A tire according to a comparative example 1 was obtained in the same manner as in the example 1 except that the second reinforcing layer was not provided.

[Comparative Example 2]

A tire according to a comparative example 2 was obtained in the same manner as in the example 1 except that the carcass had a middle turnup structure and the second and the third reinforcing layers were not provided. Particulars of the carcass are shown in the following table 2.

[Example 8]

A tire according to an example 8 was obtained in the same manner as in the example 1 except that the carcass had an ultra high turnup structure shown in Fig. 2. Particulars of the carcass are shown in the following table 2.

[Comparative Example 3]

A tire according to a comparative example 3 was obtained in the same manner as in the example 1 except that the carcass had a high turnup structure and the third reinforcing layer was not provided. Particulars of the carcass are shown in the following table 2.

[Comparative Example 4]

A tire according to a comparative example 4 was obtained in the same manner as in the example 1 except that the carcass had a high turnup structure and the second and the third reinforcing layers were not provided. Particulars of the carcass are shown in the following table 2.

[Driving Test]

A tire was fitted to a rim of "18 X 9 - JJ" and filled with air to have an internal pressure of 200 kPa. The tire was attached to a four-wheel-drive type passenger car (trade name "IMPREZA") with an engine displacement of 2000 cm$^3$. This passenger car was driven at a racing circuit and a driver evaluated its traction performance and side grip performance. The results are shown in the following tables 1 and 2 using a number "100" for the comparative example 4 as an index.

[Formability Evaluation]

Degrees of easiness of preforming of the green tire were rated based on the following criteria.

A: Easy to forming
B: A little difficult to forming
C: Difficult to forming

The results are shown in the following tables 1 and 2.

Table 1 Results of Evaluation

| | Example 2 | Example 3 | Example 1 | Example 4 | Example 5 | Example 6 |
|---|---|---|---|---|---|---|
| Sectional view | Fig.3 | Fig.3 | Fig.3 | Fig.3 | Fig.3 | Fig.3 |
| Carcass type | LTU | LTU | LTU | LTU | LTU | LTU |
| Height of first carcass ply HX (mm) | 20 | 20 | 20 | 20 | 20 | 20 |
| (HX/HP)*100 | 55% | 55% | 55% | 55% | 55% | 55% |
| Height of second carcass ply HY (mm) | 10 | 10 | 10 | 10 | 10 | 10 |
| (HY/HP)*100 | 28% | 28% | 28% | 28% | 28% | 28% |
| Height of first reinforcing layer H1 (mm) | 45 | 45 | 45 | 45 | 45 | 45 |
| (H1/H)*100 | 53% | 53% | 53% | 53% | 53% | 53% |
| Height of third reinforcing layer H2 (mm) | 30 | 30 | 30 | 30 | 30 | 40 |
| (H2/H)*100 | 35% | 35% | 35% | 35% | 35% | 47% |
| Height of second reinforcing layer H3 (mm) | 40 | 40 | 40 | 40 | 40 | 40 |
| (H3/H)*100 | 47% | 47% | 47% | 47% | 47% | 47% |
| Length of second reinforcing layer (H3-HL) (mm) | 8 | 13 | 30 | 42 | 51 | 30 |
| ((H3-HL)/H)*100 | 9% | 15% | 35% | 49% | 60% | 35% |
| Traction performance | 115 | 113 | 110 | 107 | 105 | 100 |
| Side grip performance | 115 | 117 | 120 | 123 | 125 | 120 |
| Formability | A | A | A | A | A | A |
| LTU: Low turnup | | | | | | |

Table 2 Results of Evaluation

| | Example 7 | Comparative Example 1 | Comparative Example 2 | Example 8 | Comparative Example 3 | Comparative Example 4 |
|---|---|---|---|---|---|---|
| Sectional view | - | - | - | Fig.2 | - | - |
| Carcass type | LTU | LTU | MTU | UHTU | UHTU | UHTU |
| Height of first carcass ply HX (mm) | 20 | 20 | 35 | 65 | 65 | 65 |
| (HX/HP)*100 | 55% | 55% | 97% | 180% | 180% | 180% |
| Height of second carcass ply HY (mm) | 10 | 10 | 20 | 35 | 35 | 35 |

(continued)

|  | Example 7 | Comparative Example 1 | Comparative Example 2 | Example 8 | Comparative Example 3 | Comparative Example 4 |
|---|---|---|---|---|---|---|
| (HY/HP)*100 | 28% | 28% | 55% | 97% | 97% | 97% |
| Height of first reinforcing layer H1 (mm) | 45 | 45 | 45 | 45 | 45 | 45 |
| (H1/H)*100 | 53% | 53% | 53% | 53% | 53% | 53% |
| Height of third reinforcing layer H2 (mm) | 30 | 30 | - | 30 | - | - |
| (H2/H)*100 | 35% | 35% | - | 35% | - | - |
| Height of second reinforcing layer H3 (mm) | 40 | - | - | 40 | 40 | - |
| (H3/H)*100 | 47% | - | - | 47% | 47% | - |
| Length of second reinforcing layer (H3-HL) (mm) | 30 | - | - | 30 | 30 | - |
| ((H3-HL)/H)*100 | 35% | - | - | 35% | 35% | - |
| Traction performance | 110 | 120 | 110 | 70 | 90 | 100 |
| Side grip performance | 110 | 80 | 90 | 120 | 110 | 100 |
| Formability | B | A | A | A | A | A |
| LTU: Low turnup MTU: Middle turnup UHTU: Ultra high turnup | | | | | | |

As shown in the tables 1 and 2, the tires according to each of the examples are excellent in side grip performance. From these results of the evaluation, the advantages of the present invention are apparent.

**Claims**

1. A pneumatic tire for racing comprising

- a pair of beads (8) having a core (28) and an apex (30),
- a carcass (10, 62) laid between the beads (8),
- a first reinforcing layer (20) which is turned-up around the core (28) from inward to outward in an axial direction and includes a cord formed by an organic fiber;
- a second reinforcing layer (24) which is located outward of the apex (30) in the axial direction and includes a steel cord, and
- a chafer layer (18);

**characterized by**
a third reinforcing layer (22) which is turned-up around the core (28) from inward to outward in the axial direction and includes a cord formed of an organic fiber.

2. The tire according to claim 1, wherein a lower part of the second reinforcing layer (24) is located between the first reinforcing layer (20) and the third reinforcing layer (22), and a lower end (52) of the second reinforcing layer (24) is located outward of the core (28) in a radial direction.

3. The tire according to claim 2, wherein an upper end (58) of the second reinforcing layer (24) is located between a turnup end (54) of the first reinforcing layer (20) and a turnup end (56) of the third reinforcing layer (22) in the radial direction.

4. The tire according to claim 1, wherein a percentage of a length of the second reinforcing layer (24) in the radial direction to a height of the tire is 15% or greater and 50% or less.

5. The tire according to claim 1, wherein the carcass (62) has a first carcass ply (64) and a second carcass ply (66) which are turned up around the core (28) from inward to outward in the axial direction, and
a turnup end (68) of the first carcass ply (64) and a turnup end (70) of the second carcass ply (66) are located inward of a point of a maximum width of the tire in the radial direction.

**Patentansprüche**

1. Luftreifen für Rennen, umfassend

   - ein Paar Wülste (8) mit einem Kern (28) und einem Kernreiter (30),
   - eine Karkasse (10, 62), die zwischen die Wülste (8) gelegt ist,
   - eine erste Verstärkungsschicht (20), die um den Kern (28) von innen nach außen in einer axialen Richtung umgeschlagen ist und einen durch eine organische Faser gebildeten Kord umfasst;
   - eine zweite Verstärkungsschicht (24), die in der axialen Richtung außerhalb des Kernreiters (30) angeordnet ist, und einen Stahlkord umfasst, und
   - eine Wulstbandschicht (18);

   **gekennzeichnet durch**
   eine dritte Verstärkungsschicht (22), die in der axialen Richtung um den Kern (28) von innen nach außen umgeschlagen ist und einen aus einer organischen Faser gebildeten Kord umfasst.

2. Reifen nach Anspruch 1,
   wobei ein unterer Teil der zweiten Verstärkungsschicht (24) zwischen der ersten Verstärkungsschicht (20) und der dritten Verstärkungsschicht (22) angeordnet ist, und ein unteres Ende (52) der zweiten Verstärkungsschicht (24) in einer radialen Richtung außerhalb des Kerns (28) angeordnet ist.

3. Reifen nach Anspruch 2,
   wobei ein oberes Ende (58) der zweiten Verstärkungsschicht (24) in der radialen Richtung zwischen einem Umschlagende (54) der ersten Verstärkungsschicht (20) und einem Umschlagende (56) der dritten Verstärkungsschicht (22) angeordnet ist.

4. Reifen nach Anspruch 1,
   wobei ein Prozentsatz einer Länge der zweiten Verstärkungsschicht (24) in der radialen Richtung zu einer Höhe des Reifens 15 % oder mehr und 50 % oder weniger beträgt.

5. Reifen nach Anspruch 1,
   wobei die Karkasse (62) eine erste Karkasslage (64) und eine zweite Karkasslage (66) aufweist, die um den Kern (28) von innen nach außen in der axialen Richtung umgeschlagen sind, und
   ein Umschlagende (68) der ersten Karkasslage (64) und ein Umschlagende (70) der zweiten Karkasslage (66) in der radialen Richtung innen von einem Punkt einer maximalen Breite des Reifens angeordnet sind.

**Revendications**

1. Pneumatique pour courses automobiles, comprenant :

- une paire de talons (8) ayant une âme (28) et un sommet (30),
- une carcasse (10, 62) posée entre les talons (8),
- une première couche de renforcement (20) qui est retroussée autour du talon (28) de l'intérieur vers l'extérieur dans une direction axiale et inclut un câblé formé par une fibre organique ;
- une seconde couche de renforcement (24) qui est située à l'extérieur du sommet (30) dans la direction axiale et inclut un câblé en acier, et
- une couche formant enveloppe de talon (18);

**caractérisé par**
une troisième couche de renforcement (22) qui est retroussée autour de l'âme (28) de l'intérieur vers l'extérieur dans la direction axiale et inclut un câblé formé d'une fibre organique.

2. Pneumatique selon la revendication 1, dans lequel une partie inférieure de la seconde couche de renforcement (24) est située entre la première couche de renforcement (20) et la troisième couche de renforcement (22), et une extrémité inférieure (52) de la seconde couche de renforcement (24) est située à l'extérieur de l'âme (28) dans une direction radiale.

3. Pneumatique selon la revendication 2, dans lequel une extrémité supérieure (58) de la seconde couche de renforcement (24) est située entre une extrémité retournée (54) de la première couche de renforcement (20) et une extrémité retournée (56) de la troisième couche de renforcement (22) dans la direction radiale.

4. Pneumatique selon la revendication 1, dans lequel un pourcentage d'une longueur de la seconde couche de renforcement (24) dans la direction radiale sur une hauteur du pneumatique est 15 % ou plus et 50 % ou moins.

5. Pneumatique selon la revendication 1, dans lequel la carcasse (62) comprend une première couche de carcasse (64) et une seconde couche de carcasse (66) qui sont retroussées autour de l'âme (28) de l'intérieur vers l'extérieur dans la direction axiale, et
une extrémité retournée (68) de la première couche de carcasse (64) et une extrémité retournée (70) de la seconde couche de carcasse (66) sont situées à l'intérieur d'un point de largeur maximum du pneumatique dans la direction radiale.

Fig. 1

Fig. 2

Fig. 3

**EP 1 849 626 B1**

REFERENCES CITED IN THE DESCRIPTION

**Patent documents cited in the description**

- JP 2006121520 A
- JP 2003285611 A
- JP 2004217042 A
- EP 0017258 A